Europäisches Patentamt

European Patent Office

Office européen des brevets

(11) Publication number : **0 279 540 B1**

# EUROPEAN PATENT SPECIFICATION

(12)

(45) Date of publication of patent specification :
30.11.94 Bulletin 94/48

(21) Application number : 88300731.2

(22) Date of filing : 28.01.88

(51) Int. Cl.⁵ : **G11B 5/012,** G11B 19/24,
// G11B20/10

---

(54) **Method for formatting a disc, method for reading and writing on a disc thus formatted, disc drive with a disc thus formatted and disc thus formatted.**

---

(30) Priority : **19.02.87 US 16166**

(43) Date of publication of application :
24.08.88 Bulletin 88/34

(45) Publication of the grant of the patent :
30.11.94 Bulletin 94/48

(84) Designated Contracting States :
**DE FR GB NL**

(56) References cited :
EP-A- 0 158 067
EP-A- 0 199 425
US-A- 4 514 771
PATENT ABSTRACTS OF JAPAN, vol. 4, no.
160, (P-35)[642], 8th November 1980; & JP-A-55
108 918 (FUJITSU K.K.) 21-08-1980

(73) Proprietor : **SEAGATE TECHNOLOGY
INTERNATIONAL
c/o Maples & Calder,
P.O. Box 309
Georgetown, Grand Cayman Island (KY)**

(72) Inventor : **Bremmer, Robert Alan
4816 NW 65th Street
Oklahoma City OK 73132 (US)**
Inventor : **Kovner, Vladimir
4653 C West Nicklas
Oklahoma City OK 73132 (US)**
Inventor : **Stone, Dennis Carl
11568 Darrah Avenue
Simi Valley California 93063 (US)**

(74) Representative : **Kenyon, Sarah Elizabeth et al
J. Miller & Co.
34 Bedford Row
Holborn
London WC1R 4JH (GB)**

EP 0 279 540 B1

## Description

Magnetic disks are commonly used to store data for computer applications. Disks are divided into a number of concentric circular tracks and data is stored along each track as individual magnetised portions of the track. A transducer having a flux path and a gap is used to magnetise the track, the disk being passed near the gap. By changing the magnetic flux passing through the gap, individual portions of the track are magnetised. The same transducer is also used to read the data off the disk.

It is desirable to maximise the amount of data that can be stored on a disk in order to save space and reduce the number of disks needed to store a particular amount of data.

Several methods are currently used to store data on a disk. The simplest method writes or inputs the data onto the disk at a fixed frequency as the magnetic disk rotates at a fixed angular velocity.

A major drawback associated with this method relates to data density, which is the amount of data which can be stored per unit length track. Since the outer tracks of a disk are longer than the inner tracks, the data density drops off significantly for the outer tracks. Consequently, storage space is wasted on all but the innermost track when using the fixed frequency, fixed angular velocity method of data storage.

To overcome this drawback, constant data density methods have been developed, which provide increased data storage capacity relative to the fixed frequency, fixed angular velocity method. Constant data density is achieved by either varying the write frequency as a function of radius while keeping the angular velocity constant or by varying the angular velocity of the disk as a function of radius while keeping the write frequency constant. An example of the latter can be found in U.S. Patent No. 4514771 by Victor Technologies Inc. Typically, the maximum data density is determined for the inside track and on all the remaining tracks the data is recorded at the same data density.

A drawback of either constant data density methods is that read errors increase on the outermost tracks. Variations in magnetic characteristics of the magnetic systems affect the optimal data density from track to track across the disk. For example, variations in the flying height of the slider, the thickness of the magnetic medium, the linear speed of the slider in relation to the disk and the response of the read/write circuitry affect the optimal data denisty.

Both constant data density methods fail to consider these variations in magnetic characteristics. The consequence is that data is written in particular tracks at frequencies other than the frequency which would produce an optimal data density for that track. Typically, the optimal data density is lower for the outer tracks than for the inner tracks. So if the data density for the inner track is used as the constant for the data density across the disk, increased read errors result in the outer tracks where the data density should be lower to account for the changed magnetic characteristics of the system. If on the other hand the data density for the outermost track is used as the constant for the data density across the disk, the data density in the inner track will be lower than necessary.

According to the present invention there is provided a method of formatting one or more discs in a disc drive including one or more transducers, the or each transducer being associated with the or a respective disc thereby forming one or more disc-to-transducer interfaces, each disc having a plurality of concentric tracks for magnetically storing data pulses thereon at a selected frequency, the selected frequency varying the voltage amplitude of a pulse train being read, and a data read/write circuit coupled to the or each disc and transducer, said method characterised by comprising:

determining the pulse width at fifty percent amplitude of an isolated pulse of the or each disc-to-transducer interface for each track of the or one of the discs; and

calculating the read/write frequency for each track using the determined pulse width so as to maintain a substantially constant data resolution across the disc data resolution being defined by the voltage amplitude at the selected frequency being divided by the voltage amplitude at a lower frequency.

This enables the amount of data stored on each track to be optimised, i.e. to be maximised for a given required error rate. Either the read/write frequency or the disk speed may vary in dependence on the selected track in correspondence with the amount of data to be stored on that track, preferably using a frequency synthesiser which produces a zone clock signal having a variable frequency.

According to another aspect of the present invention there is provided a method of reading and writing data from or to one or more discs which have been formatted in accordance with the foregoing method said data read/write circuit including a memory for storing with each track address a selected read/write frequency which maintains a substantially constant data resolution across the disc, said method characterised by comprising:

determining the track address of the or one of the transducers;

obtaining from the memory the selected read/write frequency associated with the determined track address of the transducer;

2

EP 0 279 540 B1

altering the data read/write circuit for enabling data to be read or written at the selected frequency.

According to a further aspect there is provided a disc drive comprising:

one or more discs having been formatted in accordance with the foregoing method said disc drive characterised by

a memory coupled to the data read/write circuit for storing with each track address a selected read/write frequency which maintains a substantially constant data resolution across the disc thereby enabling data to be read or written at the selected frequency.

According to a still further aspect there is provided a magnetic storage disc which is formatted in accordance with the foregoing method.

The present invention is now described with reference to the accompanying drawings, wherein:

Figure 1 shows a magnetic disk having a number of data storage tracks;

Figure 2 shows several sectors in one track of a disk;

Figure 3 is a flow chart of the program executed to optimise frequency and data density at a particular track location;

Figure 4 is a graph comparing the capacity of a disk using the present method compared with the constant data density methods and the constant frequency method;

Figure 5 is a graph showing the relationship between $PW_{50}$ and the radius of a magnetic disk;

Figure 6 depicts a circuit used to implement the present method;

Figure 7 depicts the frequency synthesiser portion of the circuit shown in Figure 6; and

Figure 8 depicts a modified circuit used to implement the present method.

Using the present method, the data storage capacity of the magnetic disk 10 is increased relative to the known methods (for the same maximum error rate associated with either constant data density method). Briefly, the method includes measuring a magnetic characteristic of the data storage system at a number of locations across the data storage disk 10. The data density in each track on the disk 10 is optimised based upon the measured magnetic characteristic. The optimal frequency which produces the optimised data density and the corresponding track location are stored in a microprocessor. In the preferred embodiment, the microprocessor controls the read and write frequencies for the particular tracks. In an alternative embodiment, the microprocessor controls the angular velocity of the disk. In addition, the microprocessor may be programmed to hold the write or read frequency constant for a group of tracks capable of holding the same integer number of sectors. A new group is formed when a new integer number of sectors will fit onto a particular track at the optimal data density. The present method may be applied to each particular transducer and magnetic disk combination or the results from a particular combination may be used to program microprocessors for disk drives using the same magnetic system combination. The first following section describes the basis for optimising the data density based on the magnetic characteristics of the disk. The method and the apparatus used to carry out the method are also described in detail.

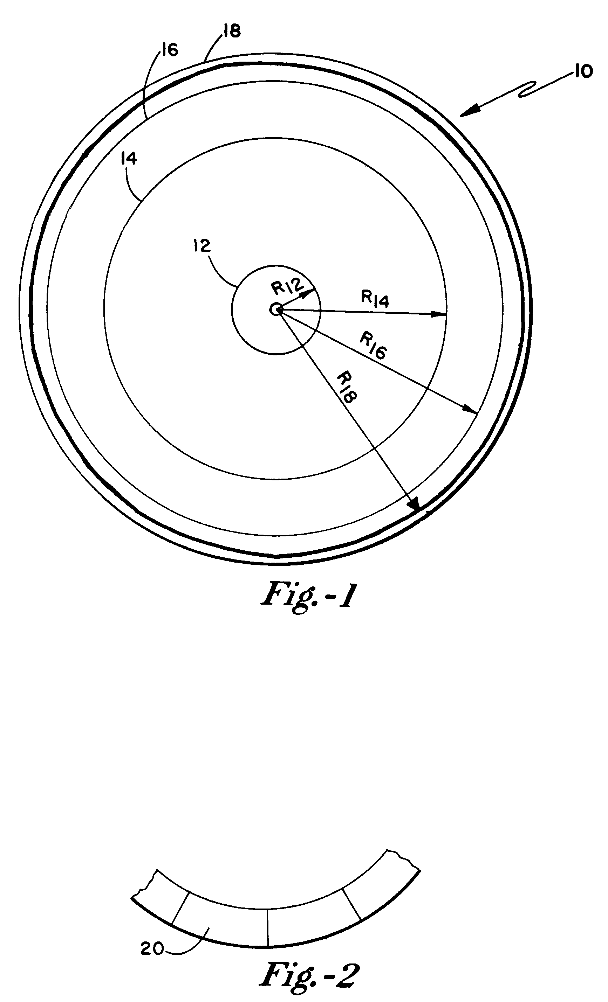

Figure 1 shows a data storage disk 10 with a plurality of tracks 12, 14, 16 and 18 with respective radii $R_{12}$, $R_{14}$, $R_{16}$, and $R_{18}$ from the centre of the disk 10. Referring to Figure 2, each track includes a number of sectors, such as sector 20. Each sector on the disk holds a predetermined number of data bits.

**BASIS FOR OPTIMISING DATA DENSITY**

The isolated pulse transition is an indicator known in the art to give a measure of overall magnetic system capacity for a particular magnetic system. In a paper entitled Design Techniques for the Saturated Magnetic Recording Process, a thesis originally submitted in May 1972 to the Faculty of the Graduate College of the Oklahoma State University in partial fulfillment of the requirements for the Degree of Master of Science, the author, John Popa, expresses the isolated pulse transition mathematically in terms of readback voltage (voltage induced in a magnetic read head) as a function of time, as follows:

$$e(t) = C \frac{1}{1 + \left[ k\, t_1\, (t/\lambda_1) \right]^2} \quad \text{(Equation 1)}$$

where:

c = constant

k = magnetic system figure of merit

$t_1$ = minimum time between current transitions or minimum reversal time for current.

3

Several other mathematical formulations for e(t) for an isolated pulse transition have been developed. Popa's formulation has a reduced number of variables compared to other formulations for e(t) and some of the variables are measurable. Thus, using Popa's formulation, results are more easily interpreted than with more complex equations. The following is an interpretation of the Popa formulation used to optimise the frequency at which data is recorded on a disk based upon a measurable magnetic characteristic.

An isolated pulse transition is written at a frequency such that there is no interaction between consecutive pulses either when written or during readback. A series of pulses may be combined to more closely simulate actual conditions, such as data crowding. The pulses are combined by linear superposition to form a train of pulses as follows:

$$\frac{e(t)}{C} = \frac{1}{1+[kt_1(\frac{t}{t_1}-1)]^2} - \frac{1}{1+[kt_1(\frac{t}{t_1}-2)]^2} + \ldots \frac{1}{1+[kt_1(\frac{t}{t_1}-n)]^2} \quad (\text{Equation } 2)$$

In closed form Equation 2 can be expressed as:

$$\frac{e(t)}{C} = \sum_{n=1}^{N} \frac{(-1)^{n+1}}{1+[kt_1(\frac{t}{t_1}-n)]^2} \quad (\text{Equation } 3)$$

Popa shows that the constant k in the above equations, referred to as the magnetic system figure of merit, can be expressed in terms of an easily measured value, $PW_{50}$, as follows:

$$k = \frac{2}{PW_{50}} \quad (\text{Equation } 4)$$

where $PW_{50}$ is the time between readback voltage half amplitude points of a single isolated pulse. Many parameters of a given magnetic system, such as the flying height of the head, the magnetic media used in a system, the radius at which the head is flying, the relative velocity between the head and the magnetic medium, and characteristics of the head, affect the $PW_{50}$ value.

Needless to say having calculated the $PW_{50}$ for a number of tracks, the correlation can be determined to extrapolate for the other tracks.

The time between transitions, which is the minimum reversal time for current, in the above equations can also be expressed in terms of frequency as follows:

$$t_1 = 2/f \quad (\text{Equation } 5)$$

where f is frequency of interest. It should be noted that the minimum reversal time, $t_1$, will occur over one-half of a cycle. Substituting Equation 4 and Equation 5 into Equation 3 and manipulating algebraically yields the following mathematical form useful for computer analysis:

$$\frac{e(t)}{C} = \sum_{n=1}^{N} \frac{(-1)^{n+1}}{1+[\frac{1}{PW_{50}f}(2ft-n)]^2} \quad (\text{Equation } 6)$$

The $PW_{50}$ value and any selected frequency can be used in Equation 6 to yield a voltage value divided by a constant. By dividing the result of Equation 6 at one frequency by the result of Equation 6 by another frequency, the resolution between the two frequencies results. By using Equation 6, the optimum resolution for a magnetic system can be approximated by an iterative process, the details of which are explained in the following paragraphs.

The first step is to measure $PW_{50}$. Once $PW_{50}$ is measured, an estimate is made of the optimal frequency and the value obtained from Equation 6 is used to calculate resolution. Resolution is a comparison of the readback voltage of a pulse as written to the readback voltage of a recovered isolated pulse. More strictly defined, resolution equals the readback voltage amplitude of a train of pulses recorded at the highest data frequency divided by the readback voltage amplitude of a train of pulses recorded at the lowest data frequency for the particular recording system.

As is known in the art, data is encoded using one of several coding schemes in order to pack more data onto a disk. For each particular coding scheme used in a magnetic system there is a particular error rate associated with a particular resolution. Therefore, knowing the coding scheme for a magnetic system, a resolution is selected with an error rate less than the value specified. Each particular coding scheme also has a range of frequencies associated with it. The highest recording frequency in the range is related to the lowest recording frequency in the range by a constant.

In a magnetic system a relationship exists between resolution, error rate, frequency and data density. The common thread in this relationship is the amount of interaction between pulses. As the data density or the frequency at which data was written increases, the interaction between recovered pulses also increases. As the interaction between pulses increases, the readback voltage amplitude of a pulse train decreases. Since resolution is a comparison of the amplitude of the readback voltage of actual highest frequency pulse train to the readback voltage for the actual lowest frequency pulse train, it follows that the resolution drops as the interaction between pulses increases. The error rate also increases as interaction between the pulses increases since each pulse becomes less distinguishable from the others.

## ITERATIVE OPTIMISATION SEQUENCE

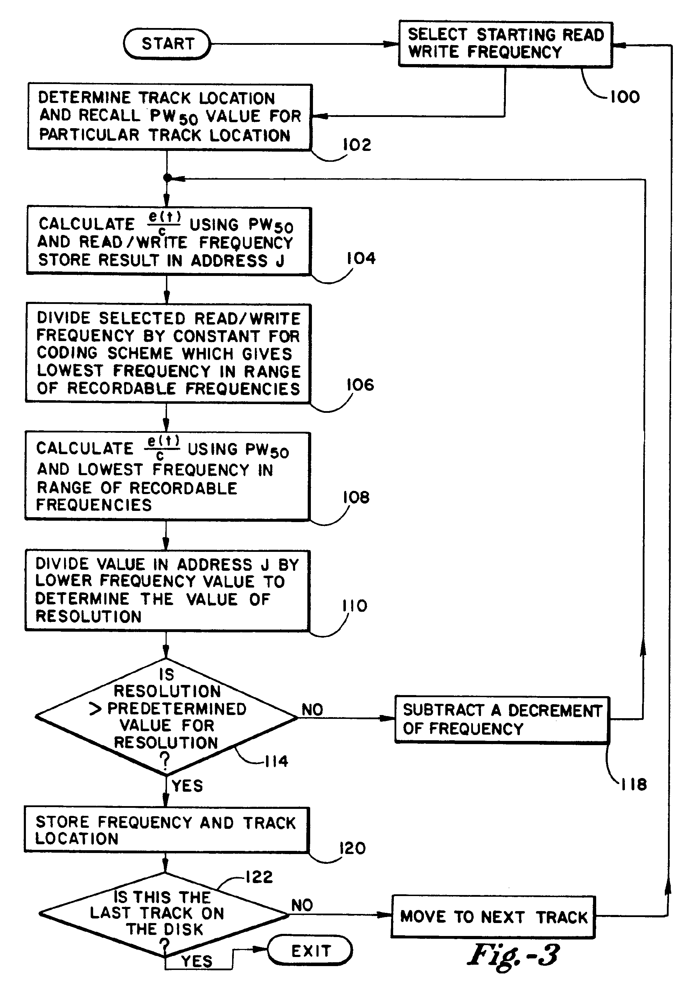

Optimising the data density for a particular track is an iterative process of choosing the highest frequency that produces a particular resolution. Figure 3 is a flow diagram of this iterative process.

The initial starting step in the iterative process is to select an actual starting read/write frequency for a particular track, box 100. Next, box 102, the track position is determined and the previously determined value for $PW_{50}$ for that track is recalled from memory. The starting track can conveniently be taken as the outermost track and the starting frequency as one known to be greater than the optimal frequency. (Obviously the initial starting point could also be the innermost track with the starting frequency as one known to be less than the optimal frequency. Of course, if the innermost track is selected as the starting point, many of the steps that follow would have to be reversed.)

Next, in box 104, the initially selected frequency and the recalled $PW_{50}$ are used to calculate $e(t)/C$ using Equation 6, and the result stored in a memory address J.

The lowest recording frequency in the range of recording frequencies is then determined, box 106, by dividing the actual frequency used (found in box 104) by the constant which relates the highest recording frequency in the range to the lowest recording frequency for the coding scheme to be used. Thus, the selected frequency is assumed to be the high frequency. The constant is actually the ratio between the actual highest read/write frequency and the lowest read/write frequency.

Next, in box 108, $e(t)/C$ for the lowest data frequency is determined using the frequency determined in box 106 and the recalled $PW_{50}$ value for the particular track location.

Next, in box 110, the resolution is determined by dividing the result of box 104 by the result from box 108 which is stored in address J. It should be noted that the value for resolution is dimensionless, since the resolution is the voltage amplitude associated with the highest write frequency divided by the voltage amplitude associated with the lowest write frequency.

Next, the calculated resolution is compared to the desired (reference) resolution, Decision Box 114. The desired resolution is the same for each track on the disk. If the calculated value is less than the desired resolution, the iterative process continues after subtracting a decrement of frequency from the frequency, box 116. The process is repeated, beginning at box 104.

If the calculated value of resolution is greater than or equal to the predetermined resolution the read/write frequency is considered optimum for the track. The optimum frequency and the track location are stored, box 120. (Obviously the calculated value could also be compared to a range of values centred about a particular predetermined value of resolution). The next step is to determine if optimal frequencies have been determined for all the tracks on the disk, decision box 122. If not, the next track is treated in a similar fashion. Since the distance between tracks is small the optimal frequency for the previous, adjacent track is generally selected for the starting read/write frequency for the next track.

Once all the tracks have been treated according to the iterative process shown in Figure 3, the process is complete. Completion of the iterative process produces a table having an optimised frequency for each track location stored in memory.

The iterative process can be used in several ways to optimise the data density on a magnetic disk. The process can be used to optimise the capacity for one particular combination which comprises a magnetic system, and this can then be used to program all similarly manufactured units. The process can also be applied to each unit upon manufacture. A particular storage device could also be programmed to perform the iterative process.

## COMPARISON WITH KNOWN SYSTEMS

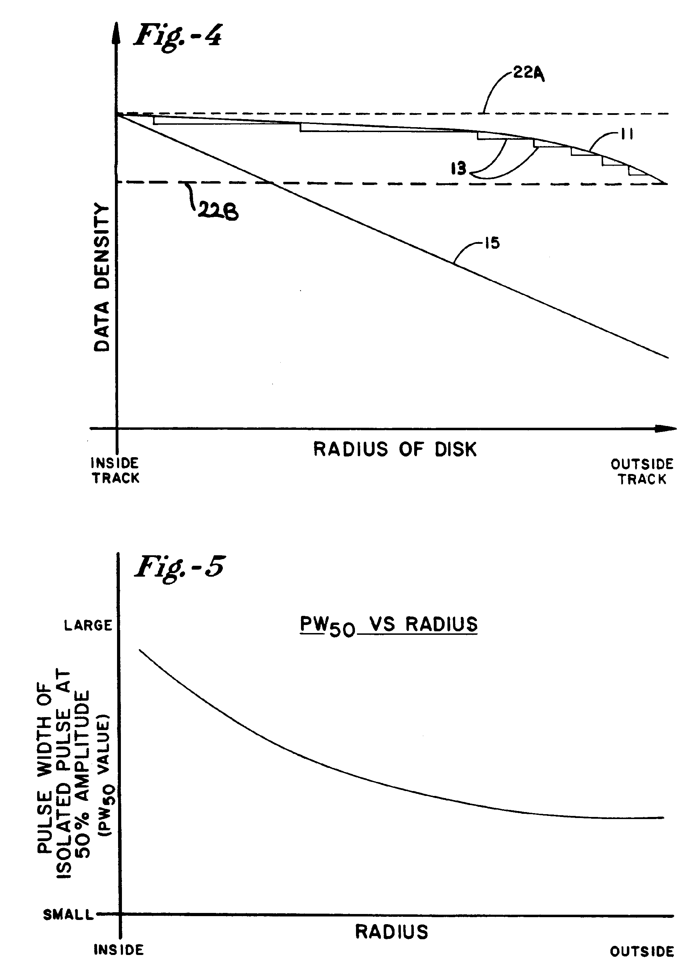

Figure 4 shows the data density DD of several recording methods as a function of track location (radius R). The constant data density method is shown by the two broken lines 22A and 22B. The constant angular velocity method is shown as line 15. The curve 11 shows the data capacity of the present method as a function of the radius of the disk.

The curves 11, 15 and 22B are all based on the same maximum read error rate for the worst case track. As can be seen, the data density of the present optimisation method exceeds that of the other two methods. The data density associated with the constant angular velocity method declines linearly as a function of radius from the inside track. The data density associated with the present optimisation method more closely approaches constant data density, but is always above the constant density curve 22B.

Curve 22A is a data density curve for constant density with the same density (and hence error rate) on the inside track as for the constant angular velocity curve 15 and the curve 11 for the present method. Although this constant density curve represents a higher total data capacity than that for curve 11, it gives an unduly high error rate for the outer tracks.

Figure 5 shows the general relationship between $PW_{50}$ and the radius R on a disk where $PW_{50}$ is measured. Basically, the value of $PW_{50}$ is smallest on the outer tracks of the disk and increases to a larger value at the innermost track. The drop in data density is related to the non-linear characteristic of the $PW_{50}$ value as shown in Figure 5. If the density at which data is being written stays constant, increased numbers of read errors would result. The present optimisation method corrects for this decrease in the magnetic capability of the magnetic system by decreasing the write data density. The resolution remains substantially constant across the disk and therefore no higher incidence of read errors occurs on the outer tracks than on the inner tracks.

## GROUPING OF TRACKS

As an additional step, the tracks may be grouped into bands. After determining the optimal frequency using the disclosed method, the number of sectors each track can hold is calculated and the tracks capable of holding the same integral number of sectors are grouped together. Each sector holds a predetermined number of bits and the disks are formatted in terms of sectors. In terms of data storage, portions of sectors are not usable. It also takes time to switch frequencies. Consequently, to simplify the method during operation and to increase the speed of the storage system, the read/write frequency is held constant throughout the group of tracks. The read/write frequency is changed when a new integral number of sectors can be fitted on the track at the previously determined optimal frequency. For example, three adjacent tracks may be able to hold 10.3, 10.5 and 10.9 sectors respectively but since fractional parts of sectors cannot be used each track can effectively hold 10 sectors. Rather than switch write frequencies for each track to achieve optimal data density for each track, the write frequency is held constant for each track in the group. The write frequency is not changed until a new integral number of sectors can be held on a track at the optimal data density for the track. When a different integral number of sectors can be held, the write frequency is changed to the write frequency of the shortest track capable of holding the same integral number of sectors at the optimised frequency. It should be noted that a particular group may only include one track. Previously tracks were grouped arbitrarily and optimal read/write frequencies were ignored when grouping the tracks.

The result of this formatting into sectors is that the data capacity of a storage disk drops slightly from the optimal curve 11 shown in Figure 4. As can be seen in Figure 4, the data density decreases incrementally rather than continuously when placing the data in bands and appears as a stair case line 13. The innermost track in the group determines the frequency for the groups. The frequency stays constant and then moves to the new optimised data frequency when a new band capable of holding a new integer number of sectors is entered. This is indicated by the vertical line portions of line 13.

The disadvantage of losing some storage capacity is offset by several advantages associated with grouping the tracks. By incorporating this additional step, the operation of the method is simplified at no cost in terms of usable sectors on each track. Furthermore, since the number of frequency changes is decreased, the overall speed of the system is increased.

If the optimisation is done for one particular system and the systems using the same components are "copied", then incorporating the additional step will require the storage of the track numbers within a group and the frequencies used in the particular groups. If each particular storage system has the capability of programming itself, implementing this additional step will require several added programming steps.

It should be noted that only one pulse in a string of pulses is needed to obtain the amplitude necessary to determine resolution at a particular frequency. However, generally several more pulses are placed on either side of that pulse, thereby forming a train of pulses and substantially eliminating end effects.

It should also be noted that other equations may be used to optimise the write frequency for a given error rate. The above set of mathematical equations is provided as an example of one way, using the readily measured $PW_{50}$ value, and the ratio between the highest recording frequency and the lowest recording frequency for a particular coding scheme and an iterative process, for optimising the write frequency.

## DATA READ/WRITE CIRCUIT

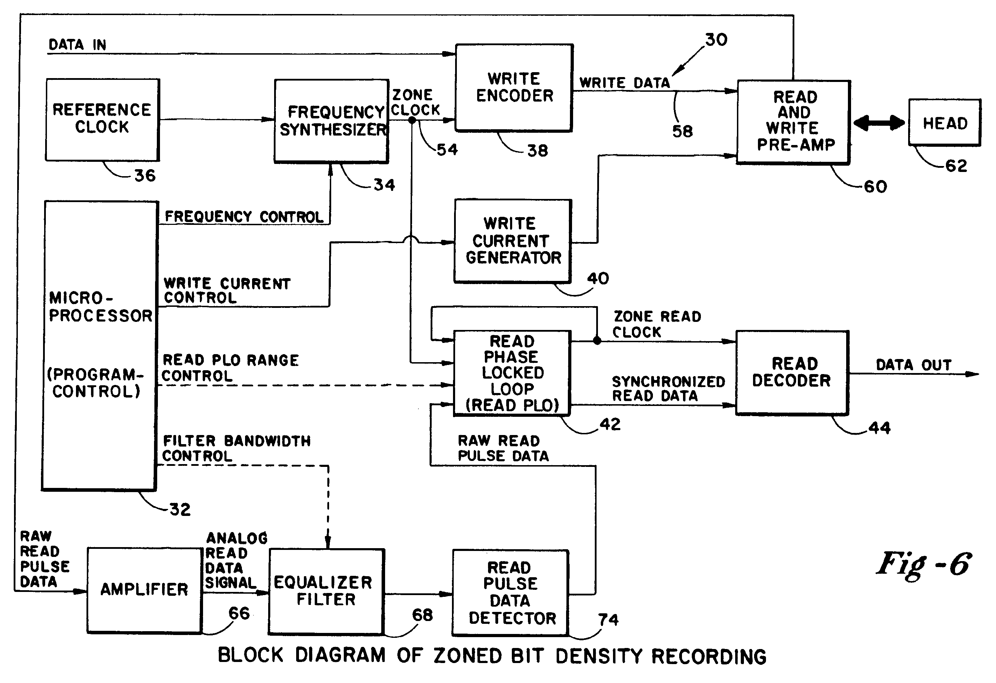

The data read/write circuit 30 shown in Figure 6 includes a microprocessor program control unit 32, a frequency synthesiser 34, a reference clock 36, a write encoder 38, a write current generator 40, a read phase locked loop 42, and a read decoder 44.

As mentioned previously, track locations and the respective optimal frequencies are stored in table form in the program control unit 32 shown schematically in Figures 6, 7 and 8. In operation, the track location of the transducer is fed to the program control unit 32 which, in response to this input, produces a signal which causes the transducer to write data at the optimised frequency for the particular track. The disk in this system rotates at a constant angular velocity, and the frequency of the transducer is changed to write at the optimised frequency for the particular track.

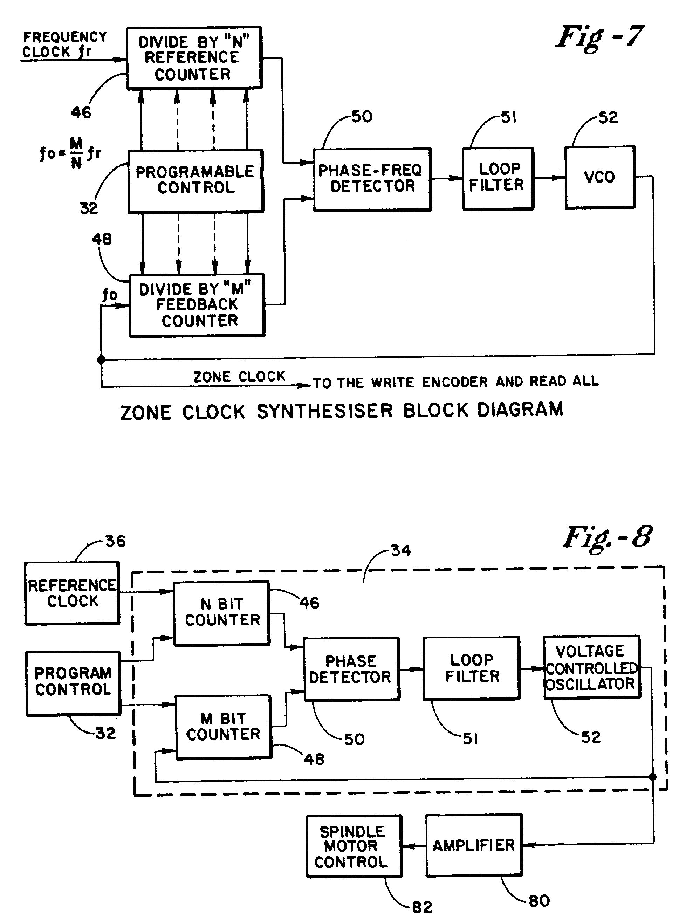

Now referring to Figure 6 and 7, the portion of the circuit which writes the data will be described. The reference clock 36 is a crystal controlled oscillator having a stable and accurate reference frequency or a servo PLO (phase locked oscillation) signal that is frequency locked to the rotational speed of the disk. The program control unit 32 controls a frequency synthesiser 34, which is fed from the reference clock 36 and the frequency synthesiser 34 is a programmable phase locked loop that is programmed to produce an output having a frequency equal to the optimal frequency associated with the particular track or zone. The frequency of the zone clock signal 54 is equal to the reference frequency times the ratio of the division coefficients in M counter 48 and N counter 46 respectively, that is:

$$F(ZONE\ CLK)\ =\ (M/N).F(REF\ CLK).$$

The program control unit 32 loads a first bit counter 46, referred to as the N counter and a second bit counter 48, referred to as the M bit counter 48 with respective division coefficients. It should be noted that the division coefficients in the N bit counter 46 and the M bit counter 48 will stay the same throughout a particular track or zone. The signal from the reference clock 36 is fed to the N counter and is divided by the division coefficient stored therein. The resultant output is sent to phase-frequency detector 50. The zone clock signal 54, which is the output from the zone clock synthesiser 34, is fed back to the M counter 48 and divided by the division coefficient stored therein. The output from the M counter is also sent to the phase-frequency detector 50, which compares the outputs from the N counter 46 and the N counter 48 and produces an output signal proportional to the difference between the two input signals. The output from phase-frequency detector 50, also known as the phase error signal, is filtered by a loop filter 51 that also provides the frequency synthesiser with phase locked loop compensation. A voltage-controlled oscillator 52 is controlled by the filtered phase-error signal. The output of the voltage-controlled oscillator VCO 52 is the zone clock signal on line 54.

The remaining write circuitry uses the zone clock signal 54 for encoding the write data 58. The zone clock signal ZCLK and the data DATA IN to be stored on the magnetic disk 10 are both fed to the write encoder 38. The write encoder 38 encodes the data at the frequency of the zone clock signal 54 to produce a write data signal on line 58. The write data signal 58 is then fed to the read-write preamp 60 and, from the preamp, to a read/write head 62 which magnetises the disk 10 (Fig 1) at the optimised frequency.

## READING DATA

The portion of the circuit 30 for reading the data will now be detailed. The read circuitry includes a read phase locked oscillator 42 which phase locks onto either the zone clock signal or the raw read pulse data from circuit 60. During the times when the circuit is not reading (read mode disable), the circuit locks onto the zone clock signal. When the circuit is reading (read enable mode), the read phase locked oscillator 42 locks onto raw read pulse data. The output of the read PLO 42, the zone read clock signal, is used to produce time windows into which detected data pulses are placed. The read data is detected by the read/write head 62, amplified by read/write preamp 60 and then fed to an amplifier 66. The analog read data from the output of the amplifier is processed through an equaliser filter 68 with optional program bandwidth control. The program control unit 32 selects a bandwidth for the equaliser filter 68 which depends on the optimal frequency of the zone being read. After filtering, the read signal is sent to a read pulse data detector 74 which detects the peaks of the complex read analog signal waveforms. The output of the read pulse data detector is zone raw pulse data. During the read operation (read enable mode) the read phase locked loop circuit 42 locks onto the raw read pulse data stream and reconstructs a stabilised replica of the read data to produce an output referred to as the synchronised read data. The read phase locked loop circuit 42 also has an optional range control to optimise its performance for different zones which have different frequencies. The program control units 32 determines a read PLO range control signal based upon the zone being read. The zone read clock and zone synchronised read data have fixed timing relationship with respect to each other. Both signals are sent to the read decoder 44 to decode and reproduce the data, which appears as output data DATA OUT.

## MODIFIED SYSTEM

Another method for producing a disk having optimised data density in various tracks or zones is to hold the write frequency constant while varying the angular velocity of the disk 10. Figure 8 shows a schematic circuit diagram for implementing this method. The circuit includes the frequency synthesiser 34, which functions as described previously. The program control 32 loads both the N bit counter 46 and the M bit counter 48 with division coefficients. The reference clock signal is also input to the N bit counter 46.

The zone clock signal, which is the output of the zone clock synthesiser, is used to control the angular velocity of the disk 10, being amplified by amplifier 80 and then sent to the spindle motor 82. The spindle motor control 82 then controls the angular velocity of the spindle. The angular velocity is a function of the frequency of the zone clock signal.

## Claims

1. A method of formatting one or more discs (10) in a disc drive including one or more transducers, the or each transducer being associated with the or a respective disc thereby forming one or more disc-to-transducer interfaces, each disc having a plurality of concentric tracks (12,14,16,18) for magnetically storing data pulses thereon at a selected frequency, the selected frequency varying the voltage amplitude of a pulse train being read and a data read/write circuit (30) coupled to the or each disc-to-transducer interface, said method characterised by comprising:

   determining the pulse width at fifty percent amplitude of an isolated pulse of the or each disc-to-transducer interface for each track of the or one of the discs; and

   calculating the read/write frequency for each track using said determined pulse width so as to maintain a substantially constant data resolution across the disc, data resolution being defined by the voltage amplitude at the selected frequency being divided by the voltage amplitude at a lower frequency.

2. A method as claimed in claim 1, wherein determining said pulse width for each track further comprises measuring said pulse width

   in a plurality of tracks on the disc; and

   generating a curve from the measured pulse width values and the corresponding track locations to determine pulse width values for the tracks on the disc having no measured pulse width value.

3. A method as claimed in claim 1 or 2, in which calculating the read/write frequency comprises

   selecting a starting frequency for each track;

   calculating the voltage amplitude for a pulse train recorded at the selected starting frequency using said selected starting frequency and said determined pulse width;

   dividing the selected starting frequency by a constant to arrive at the lower frequency;

   calculating the voltage amplitude for a pulse train recorded at the lower frequency using the lower frequency and the determined magnetic characteristic;

   determining the resolution;

   comparing iteratively the calculated resolution to a high reference resolution and a low reference resolution and, if the resolution is larger than the high reference resolution, subtracting a decrement of frequency from the selected frequency and predetermining the resolution; and, if the resolution is below the low reference resolution, adding an increment of frequency to the selected frequency and predetermining the resolution until it is between the reference resolutions.

4. A method as claimed in claim 3, wherein calculating the voltage amplitude comprises substituting said determined pulse width for the particular track and said frequency into the following equation:

$$\frac{e(t)}{c} = \sum_{n=1}^{N} \frac{(-1)^{n+1}}{1 + \left[\frac{1}{PW_{50}} f\,(2ft-n)\right]^2}$$

where

| | |
|---|---|
| $PW_{50}$ | = pulse width at fifty percent amplitude |
| f | = frequency |
| e(t) | = voltage as a function of time |
| c | = a constant |

5. A method as claimed in claim 3 or 4, wherein selecting a starting frequency includes selecting the frequency which produced the desired resolution for an adjacent track.

6. A method as claimed in any one of claims 2 to 5, further comprising
storing said read/write frequency with said track address in a memory of the disc drive.

7. A method of reading and writing data from or to one or more discs (10) which have been formatted in accordance with the method as claimed in any one of claims 1 to 6, said data read/write circuit (30) including a memory for storing with each track address a selected read/write frequency which maintains a substantially constant data resolution across the disc, said method characterised by comprising:
determining the track address of the or one of the transducers;
obtaining from the memory the selected read/write frequency associated with the determined track address of the transducer;
altering the data read/write circuit (30) for enabling data to be read or written at the selected frequency.

8. A method of reading and writing data as claimed in claim 7 wherein altering the data read/write circuit comprises producing a frequency equal to the recalled selected frequency for reading and writing data at the track address.

9. A method of reading and writing data as claimed in claim 7 wherein altering the data read/write circuit comprises changing the angular velocity of the disc so that the data is written or read on the disc at the recalled selected frequency.

10. A method of reading and writing data as claimed in any one of claim 7 to 9, further comprising
determining the number of bits a track will hold at the selected frequency for the track;
dividing the number of bits the track will hold by the number of bits each sector will hold; and
altering the data read/write circuit when the number of sectors capable of being held in a first track is a different integer number than the number of sectors capable of being held in a track adjacent to the first track.

11. A disc drive comprising
one or more discs (10) having been formatted in accordance with the method as defined in any one of claims 1 to 6, said disc drive characterised by
a memory coupled to the data read/write circuit (30) for storing with each track address a selected read/write frequency which maintains a substantially constant data resolution across the disc thereby enabling data to be read or written at the selected frequency.

12. A disc drive as claimed in claim 11, in which said data read/write circuit includes variable frequency drive circuitry (80,82) which, for each track, drives the disc at a speed corresponding to the amount of data storable by that track.

13. A disc drive as claimed in claim 11, in which said data read/write circuit includes variable frequency read/write circuitry (34,60) which, for each track, reads and writes data from and on that track at a frequency corresponding to the amount of data storable by that track.

**14.** A disc drive as claimed in claim 12 or 13, in which the variable frequency read/write or drive circuitry comprises a frequency synthesiser (34) which produces a zone clock signal (at 54) having a variable frequency.

**15.** A disc drive as claimed in claim 14, in which the frequency synthesiser comprises: a reference clock (36) which produces a reference signal; a first bit counter (46) storing an integer (N) used to divide the frequency of the reference clock to produce a divided reference clock signal; a second bit counter (48) storing an integer (M) used to divide the frequency of a zone clock signal to produce a divided zone clock signal; a phase-frequency detector (50) which receives the divided reference clock signal and the divided zone clock signal and produces an output proportional to the phase difference between the two received signals; a loop filter (51) which receives the phase-frequency detector output and produces a voltage output in response to the frequency of the phase-frequency detector output; and a voltage controlled oscillator (52) which produces the zone clock signal, the frequency of the zone clock signal varying in response to the level of the voltage output of the loop filter.

**16.** A disc drive as claimed in any one of claims 11 to 15, further comprising means for determining a magnetic characteristic for the disc to transducer interface for each track on the disc; and means using the determined magnetic characteristic for each track to select a frequency for each track that will produce a substantially constant resolution in each track across the disc.

**17.** A disc drive as claimed in any one of claims 11 to 16, in which each disc defines a plurality of zones, each zone comprising one or more tracks and said memory stores the same selected read/write frequency for each track of the respective zone.

**18.** A disc drive as claimed in claim 17, further comprising means for determining the zone in which the transducer is located.

**19.** A magnetic storage disc which is formatted in accordance with the method as claimed in any one of claims 1 to 6.

**Patentansprüche**

**1.** Verfahren zum Formatieren einer oder mehrerer Platten (10) in einem Plattenlaufwerk, das einen oder mehrere Wandler, wobei der oder jeder Wandler der oder einer jeweiligen Platte zugeordnet ist, so daß ein oder mehrere Platten-/Wandler-Schnittstellen gebildet werden und jede Platte eine Vielzahl von konzentrischen Spuren (12, 14, 16, 18) zur magnetischen Speicherung von Datenimpulsen auf diesen Spuren mit einer ausgewählten Frequenz aufweist, wobei die ausgewählte Frequenz die Spannungsamplitude einer gelesenen Impulsfolge ändert, und eine Daten-Lese-/Schreibschaltung (30) einschließt, die mit der oder jeder Platten-/Wandler-Schnittstelle gekoppelt ist, wobei das Verfahren dadurch gekennzeichnet ist, daß es folgende Schritte umfaßt:
Ermitteln der Impulsbreite bei einer 50%-Amplitude eines isolierten Impulses der oder jeder Platten-/Wandler-Schnittstelle für jede Spur auf der oder einer der Platten, und
Berechnen der Lese-/Schreibfrequenz für jede Spur unter Verwendung der ermittelten Impulsbreite, um auf diese Weise eine im wesentlichen konstante Datenauflösung längs der Platte aufrechtzuerhalten, wobei die Datenauflösung durch die Spannungsamplitude bei der ausgewählten Frequenz geteilt durch die Spannungsamplitude bei einer niedrigeren Frequenz definiert ist.

**2.** Verfahren nach Anspruch 1, bei dem die Ermittlung der Impulsbreite für jede Spur weiterhin die Messung der Impulsbreite in einer Vielzahl von Spuren der Platte, und die
Erzeugung einer Kurve aus den gemessenen Impulsbreitenwerten und den entsprechenden Spurpositionen zur Ermittlung von Impulsbreitenwerten für die Spuren auf der Platte, die keinen gemessenen Impulsbreitenwert aufweisen, umfaßt.

**3.** Verfahren nach Anspruch 1 oder 2, bei dem die Berechnung der Lese-/Schreibfrequenz folgende Schritte umfaßt:
Auswahl einer Anfangsfrequenz für jede Spur,
Berechnen der Spannungsamplitude für eine mit der ausgewählten Anfangsfrequenz aufgezeichnete Impulsfolge unter Verwendung der ausgewählten Anfangsfrequenz und der ermittelten Impulsbreite,

**10**

Dividieren der ausgewählten Anfangsfrequenz durch eine Konstante zur Erzielung der niedrigeren Frequenz,

Berechnen der Spannungsamplitude für eine mit der niedrigeren Frequenz aufgezeichnete Impulsfolge unter Verwendung der niedrigeren Frequenz und der ermittelten magnetischen Eigenschaft,

Bestimmen der Auflösung,

iteratives Vergleichen der berechneten Auflösung mit einer hohen Bezugsauflösung und einer niedrigen Bezugsauflösung, und, wenn die Auflösung größer als die hohe Bezugsauflösung ist, Subtrahieren eines Dekrementes der Frequenz von der ausgewählten Frequenz und Vorherbestimmen der Auflösung, und, wenn die Auflösung unterhalb der niedrigen Bezugsauflösung liegt, Addieren eines Inkrementes der Frequenz zur ausgewählten Frequenz und Vorherbestimmen der Auflösung, bis sie zwischen den Bezugsauflösungen liegt.

4. Verfahren nach Anspruch 3, bei dem die Berechnung der Spannungsamplitude das Einsetzen der ermittelten Impulsbreite für die bestimmte Spur und der Frequenz in die folgende Gleichung umfaßt:

$$\frac{e(t)}{c} = \sum_{n=1}^{N} \frac{(-1)^{n+1}}{1+\left[\frac{1}{PW_{50}f}(2ft-n)\right]^2}$$

worin
PW$_{50}$ = die Impulsbreite bei einer Amplitude von 50%,
F = die Frequenz
e(t) = die Spannung als Funktion der Zeit
c = eine Konstante ist.

5. Verfahren nach Anspruch 3 oder 4, bei dem die Auswahl einer Anfangsfrequenz die Auswahl der Frequenz einschließt, die die gewünschte Auflösung für eine benachbarte Spur ergab.

6. Verfahren nach einem der Ansprüche 2 bis 5, das weiterhin das Speichern der Lese-/Schreibfrequenz mit der Spuradresse in einem Speicher des Plattenlaufwerkes umfaßt.

7. Verfahren zum Lesen und Schreiben von Daten von einer oder mehreren Platten (10) oder auf diese, die entsprechend dem Verfahren nach einem der Ansprüche 1 bis 6 formatiert wurde(n), wobei die Daten-Lese-/Schreibschaltung (30) einen Speicher einschließt, um zusammen mit jeder Spuradresse eine ausgewählte Lese-/Schreibfrequenz zu speichern, die eine im wesentlichen konstaten Datenauflösung längs der Platte aufrechterhält, wobei das Verfahren durch die folgenden Schritte gekennzeichnet ist:

Bestimmen der Spuradresse des oder eines der Wandler,

Gewinnen der ausgewählten, der vorgegebenen Spuradresse des Wandler zugeordneten Lese-/Schreibfrequenz aus dem Speicher,

Ändern der Daten-Lese-/Schreibschaltung (30), um das Lesen oder Schreiben von Daten bei der ausgewählten Frequenz zu ermöglichen.

8. Verfahren zum Lesen und Schreiben von Daten nach Anspruch 7, bei dem die Änderung der Daten-Lese-/Schreibschaltung die Erzeugung einer Frequenz umfaßt, die gleich der abgerufenen ausgewählten Frequenz zum Lesen und Schreiben an der Spuradresse ist.

9. Verfahren zum Lesen und Schreiben von Daten nach Anspruch 7, bei dem die Änderung der Daten-Lese-/Schreibschaltung das Ändern der Winkelgeschwindigkeit der Platte umfaßt, so daß die Daten auf der Platte mit der abgerufenen ausgewählten Frequenz geschrieben oder gelesen werden.

10. Verfahren zum Lesen und Schreiben von Daten nach einem der Ansprüche 7 bis 9, das weiterhin folgende Schritte umfaßt:

Bestimmen der Anzahl der Bits, die eine Spur bei der ausgewählten Frequenz für die Spur enthalten wird,

Dividieren der Anzahl der Bits, die die Spur enthalten wird, durch die Anzahl von Bits, die jeder Sektor enthalten wird, und

11

Ändern der Daten-Lese-/Schreibschaltung, wenn die Anzahl der Sektoren, die in einer ersten Spur enthalten sein können, eine andere ganzzahlige Anzahl ist, als die Anzahl von Sektoren, die in einer Spur benachbart zu der ersten Spur enthalten sein können.

11. Plattenlaufwerk mit:
    einer oder mehreren Platten (10), die entsprechend dem Verfahren nach einem der Ansprüche 1 bis 6 formatiert wurden, wobei das Plattenlaufwerk gekennzeichnet ist durch:
    einen mit der Daten-Lese-/Schreibschaltung (30) gekoppelten Speicher zum Speichern, zusammen mit jeder Spuradresse, einer ausgewählten Lese-/Schreibfrequenz, die eine im wesentlichen konstante Datenauflösung längs der Platte aufrechterhält, die es ermöglicht, daß die Daten mit der ausgewählten Frequenz gelesen oder geschrieben werden.

12. Plattenlaufwerk nach Anspruch 11, bei dem die Daten-Lese-/Schreibschaltung eine mit veränderlicher Frequenz betreibbare Ansteuerschaltung (80, 82) einschließt, die die Platte für jede Spur mit einer Drehzahl antreibt, die der in dieser Spur speicherbaren Datenmenge entspricht.

13. Plattenlaufwerk nach Anspruch 11, bei dem die Daten-Lese-/Schreibschaltung eine mit veränderlicher Frequenz betreibbare Lese-/Schreibschaltung (34, 60) einschließt, die für jede Spur Daten mit einer Frequenz, die der durch diese Spur speicherbaren Datenmenge entspricht, von dieser Spur liest und auf diese Spur schreibt.

14. Plattenlaufwerk nach Anspruch 12 oder 13, bei dem die mit einer veränderlichen Frequenz betreibbare Lese-/Schreib- oder Ansteuerschaltung einen Frequenzsynthesizer (34) umfaßt, der ein Zonentaktsignal (an 54) mit veränderlicher Frequenz erzeugt.

15. Plattenlaufwerk nach Anspruch 14, bei dem der Frequenzsynthesizer folgende Teile umfaßt: einen Bezugstakt (36), der ein Bezugssignal erzeugt, einen ersten Bitzähler (46), der eine ganze Zahl (N) speichert, die zur Division der Frequenz des Bezugstaktes verwendet wird, um ein geteiltes Bezugstaktsignal zu erzeugen, einen zweiten Bitzähler (48), der eine ganze Zahl (M) speichert, die zum Teilen der Frequenz eines Zonentaktsignals verwendet wird, um ein geteiltes Zonentaktsignal zu erzeugen, einen Phasen-/Frequenz-Detektor (50), der das geteilte Bezugstaktsignal und das geteilte Zonentaktsignal empfängt und ein Ausgangssignal proportional zur Phasendifferenz zwischen den beiden empfangenen Signalen erzeugt, ein Schleifenfilter (51), das das Ausgangssignal des Phasen-/Frequenz-Detektors empfängt und ein Spannungsausgangssignal in Abhängigkeit von der Frequenz des Phasen-/Frequenz-Detektor-Ausgangssignals erzeugt, und einen spannungsgesteuerten Oszillator (52), der das Zonentaktsignal erzeugt, wobei sich die Frequenz des Zonentaktsignals in Abhängigkeit von dem Pegel des Spannungsausgangs des Schleifenfilters ändert.

16. Plattenlaufwerk nach einem der Ansprüche 11 bis 15, das weiterhin Einrichtungen zur Bestimmung einer magnetischen Eigenschaft für die Platten-/Wandler-Schnittstelle für jede Spur auf der Platte und Einrichtungen zur Verwendung der ermittelten magnetischen Eigenschaft für jede Spur umfaßt, um eine Frequenz für jede Spur auszuwählen, die eine im wesentlichen konstante Auflösung in jeder Spur längs der Platte erzeugt.

17. Plattenlaufwerk nach einem der Ansprüche 11 bis 16, bei dem jede Platte eine Vielzahl von Zonen bildet, wobei jede Zone ein oder mehrere Spuren umfaßt, und wobei der Speicher die gleiche ausgewählte Lese-/Schreibfrequenz für jede Spur der jeweiligen Zonen speichert.

18. Plattenlaufwerk nach Anspruch 17, das weiterhin Einrichtungen zur Bestimmung der Zone umfaßt, in der sich der Wandler befindet.

19. Magnetische Speicherplatte, die entsprechend dem Verfahren nach einem der Ansprüche 1 bis 6 formatiert ist.

**Revendications**

1. Procédé de formatage d'un ou de plusieurs disques (10) dans une unité de disques comprenant un ou plusieurs transducteurs, ledit transducteur ou chacun desdits transducteurs étant associé(s) audit disque ou à un disque respectif formant de ce fait une ou plusieurs interfaces disque-transducteur, chaque disque ayant une pluralité de pistes concentriques (12,14,16,18) pour y stocker magnétiquement des impulsions de données à une fréquence sélectionnée, ladite fréquence sélectionnée faisant varier l'amplitude en tension d'un train d'impulsions lues et d'un circuit de lecture/écriture de données (30) couplé à ladite interface disque-transducteur ou à chacune desdites interfaces disque-transducteur, ledit procédé étant caractérisé en ce qu'il comprend :

la détermination de la largeur d'impulsion à une amplitude de cinquante pour cent d'une impulsion isolée de l'interface disque-transducteur ou de chacune des interfaces disque-transducteur pour chaque piste du disque ou de l'un des disques ; et

le calcul de la fréquence de lecture/écriture pour chaque piste en utilisant ladite largeur d'impulsion déterminée de manière à maintenir une résolution de données essentiellement constante sur le disque, ladite résolution de données étant définie par l'amplitude en tension à la séquence sélectionnée divisée par l'amplitude en tension à une fréquence inférieure.

2. Procédé selon la revendication 1, dans lequel la détermination de ladite largeur d'impulsion pour chaque piste comprend, en outre,

la mesure de ladite largeur d'impulsion dans une pluralité de pistes sur le disque ; et

la génération d'une courbe à partir des valeurs de la largeur d'impulsion mesurée et les positions correspondantes des pistes pour déterminer les valeurs de largeur d'impulsion pour les pistes sur le disque n'ayant pas de valeur de largeur d'impulsion mesurée.

3. Procédé selon la revendication 1 ou 2, dans lequel le calcul de la fréquence de lecture/écriture comprend

la sélection d'une fréquence de départ pour chaque piste ;

le calcul de l'amplitude en tension pour un train d'impulsions enregistré à la fréquence de départ sélectionnée en utilisant ladite fréquence de départ et ladite largeur d'impulsion ;

la division de la fréquence de départ sélectionnée par une constante pour obtenir la fréquence inférieure ;

le calcul de l'amplitude en tension pour un train d'impulsions enregistré à la fréquence inférieure en utilisant la fréquence inférieure et la caractéristique magnétique déterminée ;

la détermination de la résolution ;

la comparaison itérative de la résolution calculée à une résolution de haute référence et à une résolution de basse référence, et, si la résolution est supérieure à la résolution de haute référence, la soustraction d'un décrément de fréquence de la fréquence sélectionnée et la prédétermination de la résolution ; et si la résolution est inférieure à la résolution de référence, l'addition d'un incrément de fréquence à la fréquence sélectionnée et la prédétermination de la résolution jusqu'à ce qu'elle se situe entre les résolutions de référence.

4. Procédé selon la revendication 3, dans lequel le calcul de l'amplitude en tension comprend le remplacement de ladite largeur d'impulsion déterminée pour la piste particulière et ladite fréquence dans l'équation suivante:

$$\frac{e(t)}{c} = \sum_{n=1}^{N} \frac{(-1)^{n+1}}{1 + \left[\frac{1}{PW_{50}f}(2ft-n)\right]^2}$$

où

PW50 = largeur d'impulsion à une amplitude de cinquante pour cent

f = fréquence

e(t) = tension en fonction du temps

c = constante

5. Procédé selon la revendication 3 ou la revendication 4, dans lequel la sélection d'une fréquence de départ comprend la sélection de la fréquence qui a produit la résolution désirée pour une piste voisine.

6. Procédé selon l'une quelconque des revendications 2 à 5, comprenant, de plus,

le stockage de ladite fréquence de lecture/écriture avec ladite adresse de piste dans une mémoire

EP 0 279 540 B1

de l'unité de disques.

**7.** Procédé de lecture et d'écriture de données sur un ou plusieurs disques (10) qui a ou ont été formaté(s) conformément au procédé présenté dans l'une quelconque des revendications 1 à 6, ledit circuit de lecture /écriture de données (30) comprenant une mémoire pour stocker avec chaque adresse de piste une fréquence de lecture/écriture sélectionnée qui conserve une résolution de données essentiellement constante sur le disque, ledit procédé étant caractérisé en ce qu'il comporte:

la détermination de l'adresse de piste du transducteur ou de l'un des transducteurs ;

l'obtention de la mémoire de la fréquence de lecture/écriture sélectionnée associée à l'adresse de piste déterminée du transducteur ;

la modification du circuit de lecture/écriture de données (30) pour permettre la lecture ou l'écriture des données à la fréquence sélectionnée.

**8.** Procédé de lecture et d'écriture de données selon la revendication 7, dans lequel la modification du circuit de lecture/écriture de données comprend la production d'une fréquence égale à la fréquence sélectionnée rappelée pour lire et écrire des données à l'adresse de la piste.

**9.** Procédé de lecture et d'écriture de données selon la revendication 7, dans lequel la modification du circuit de lecture/écriture de données comprend le changement de la vitesse angulaire du disque de manière que les données soient écrites ou lues sur le disque à la fréquence sélectionnée rappelée.

**10.** Procédé de lecture et d'écriture de données selon l'une quelconque des revendications 7 à 9, comprenant de plus

la détermination du nombre de bits que contiendra une piste à la fréquence sélectionnée pour la piste ;

la division du nombre de bits que contiendra la piste par le nombre de bits que contiendra chaque secteur, et

la modification du circuit de lecture/écriture de données lorsque le nombre de secteurs que peut contenir une première piste est un nombre entier différent du nombre de secteurs que peut contenir une piste voisine à la première piste.

**11.** Unité de disques comprenant

un ou plusieurs disques (10) ayant été formaté(s) conformément au procédé tel que défini dans l'une quelconque des revendications 1 à 6, ladite unité de disques étant caractérisée par

une mémoire couplée au circuit de lecture/écriture de données (30) pour stocker avec chaque adresse de piste une fréquence de lecture/écriture sélectionnée qui conserve une résolution de données relativement constante sur le disque, permettant ainsi la lecture ou l'écriture des données à la fréquence sélectionnée.

**12.** Unité de disques selon la revendication 11, dans laquelle ledit circuit de lecture/écriture comprend des circuits de commande à fréquence variable (80, 82) qui, pour chaque piste, entraînent le disque à une vitesse correspondant à la quantité de données mémorisables par cette piste.

**13.** Unité de disques selon la revendication 11, dans laquelle ledit circuit de lecture/écriture comprend des circuits de lecture/écriture à fréquence variable (34, 60) qui, pour chaque piste, lit et écrit les données sur ladite piste à une fréquence correspondant à la quantité de données mémorisables par cette piste.

**14.** Unité de disques selon la revendication 12 ou la revendication 13, dans laquelle le circuit de commande ou de lecture/écriture à fréquence variable comprend un synthétiseur de fréquences (34) qui produit un signal d'horloge de zone (à 54) ayant une fréquence variable.

**15.** Unité de disques selon la revendication 14, dans laquelle le synthétiseur de fréquences comprend : une horloge de référence (36) qui produit un signal de référence ; un premier compteur de bits (46) qui mémorise un entier (N) utilisé pour diviser la fréquence de l'horloge de référence et produire un signal d'horloge de référence divisé ; un second compteur de bits (48) qui mémorise un entier (M) utilisé pour diviser la fréquence d'un signal d'horloge de zone et produire un signal d'horloge de référence divisé ; un détecteur de phase (50) qui reçoit le signal d'horloge de référence divisé et le signal d'horloge de zone divisé et produit une sortie proportionnelle à la différence de phase entre les deux signaux reçus ; un filtre à boucle (51) qui reçoit la sortie du détecteur de phase et produit une sortie de tension en réponse à la fré-

**14**

quence de la sortie du détecteur de phase ; et un oscillateur contrôlé en tension (52) qui produit le signal d'horloge de zone, la fréquence du signal d'horloge de zone variant en réponse au niveau de la sortie de tension du filtre à boucle.

16. Unité de disques selon l'une quelconque des revendications 11 à 15, comprenant de plus des moyens pour déterminer une caractéristique magnétique du disque à l'interface transducteur de chaque piste sur le disque, et des moyens pour utiliser la caractéristique magnétique déterminée pour chaque piste afin de sélectionner une fréquence pour chaque piste qui produira une résolution essentiellement constante dans chaque piste du disque.

17. Unité de disques selon l'une quelconque des revendications 11 à 16, dans laquelle chaque disque définit une pluralité de zones, chaque zone comprenant une ou plusieurs pistes, ladite mémoire stockant la même fréquence de lecture/écriture sélectionnée pour chaque piste de la zone respective.

18. Unité de disques selon la revendication 17, comprenant de plus des moyens pour déterminer la zone dans laquelle se trouve le transducteur.

19. Disque de stockage magnétique qui est formaté conformément au procédé présenté dans l'une quelconque des revendications 1 à 6.

*Fig.-1*

*Fig.-2*

START → SELECT STARTING READ WRITE FREQUENCY — 100

DETERMINE TRACK LOCATION AND RECALL $PW_{50}$ VALUE FOR PARTICULAR TRACK LOCATION — 102

CALCULATE $\frac{e(t)}{c}$ USING $PW_{50}$ AND READ/WRITE FREQUENCY STORE RESULT IN ADDRESS J — 104

DIVIDE SELECTED READ/WRITE FREQUENCY BY CONSTANT FOR CODING SCHEME WHICH GIVES LOWEST FREQUENCY IN RANGE OF RECORDABLE FREQUENCIES — 106

CALCULATE $\frac{e(t)}{c}$ USING $PW_{50}$ AND LOWEST FREQUENCY IN RANGE OF RECORDABLE FREQUENCIES — 108

DIVIDE VALUE IN ADDRESS J BY LOWER FREQUENCY VALUE TO DETERMINE THE VALUE OF RESOLUTION — 110

IS RESOLUTION > PREDETERMINED VALUE FOR RESOLUTION ? — 114

NO → SUBTRACT A DECREMENT OF FREQUENCY — 118

YES

STORE FREQUENCY AND TRACK LOCATION — 120

IS THIS THE LAST TRACK ON THE DISK ? — 122

NO → MOVE TO NEXT TRACK

YES → EXIT

*Fig.-3*

17

*Fig.-4*

22A

11

13

22B

15

DATA DENSITY

RADIUS OF DISK

INSIDE
TRACK

OUTSIDE
TRACK

*Fig.-5*

LARGE

PW$_{50}$ VS RADIUS

PULSE WIDTH OF
ISOLATED PULSE AT
50% AMPLITUDE
(PW$_{50}$ VALUE)

SMALL

RADIUS

INSIDE

OUTSIDE

18

DATA IN

REFERENCE CLOCK — 36

FREQUENCY SYNTHESIZER — 34

ZONE CLOCK — 54

WRITE ENCODER — 38

WRITE DATA — 30 — 58

READ AND WRITE PRE-AMP — 60

HEAD — 62

MICRO-PROCESSOR (PROGRAM-CONTROL) — 32

FREQUENCY CONTROL

WRITE CURRENT CONTROL

WRITE CURRENT GENERATOR — 40

READ PLO RANGE CONTROL

READ PHASE LOCKED LOOP (READ PLO) — 42

ZONE READ CLOCK

SYNCHRONIZED READ DATA

READ DECODER — 44

DATA OUT

FILTER BANDWIDTH CONTROL

RAW READ PULSE DATA

RAW READ PULSE DATA

AMPLIFIER — 66

ANALOG READ DATA SIGNAL

EQUALIZER FILTER — 68

READ PULSE DATA DETECTOR — 74

Fig-6

BLOCK DIAGRAM OF ZONED BIT DENSITY RECORDING

*Fig -7*

FREQUENCY CLOCK $fr$

DIVIDE BY "N" REFERENCE COUNTER

46

$fo = \dfrac{M}{N} fr$

PROGRAMABLE CONTROL

32

48

$fo$

DIVIDE BY "M" FEEDBACK COUNTER

PHASE-FREQ DETECTOR

50

LOOP FILTER

51

VCO

52

ZONE CLOCK → TO THE WRITE ENCODER AND READ ALL

ZONE CLOCK SYNTHESISER BLOCK DIAGRAM

*Fig.-8*

36

34

REFERENCE CLOCK

N BIT COUNTER

46

PROGRAM CONTROL

32

M BIT COUNTER

48

PHASE DETECTOR

50

LOOP FILTER

51

VOLTAGE CONTROLLED OSCILLATOR

52

SPINDLE MOTOR CONTROL

AMPLIFIER

82

80